(19) Europäisches Patentamt
European Patent Office
Office européen des brevets

(11) Veröffentlichungsnummer: **0 301 452**
**B1**

(12) # EUROPÄISCHE PATENTSCHRIFT

(45) Veröffentlichungstag der Patentschrift: **19.09.90**

(51) Int. Cl.⁵: **C02F 1/52**

(21) Anmeldenummer: **88111916.8**

(22) Anmeldetag: **23.07.88**

(54) **Verfahren zur Behandlung von Abwasser aus Rauchgasreinigungsanlagen.**

(30) Priorität: **31.07.87 DE 3725386**

(43) Veröffentlichungstag der Anmeldung: **01.02.89 Patentblatt 89/5**

(45) Bekanntmachung des Hinweises auf die Patenterteilung: **19.09.90 Patentblatt 90/38**

(84) Benannte Vertragsstaaten: **AT BE CH DE ES FR GB IT LI NL SE**

(56) Entgegenhaltungen:
**EP-A- 0 110 111**
**EP-A- 0 117 096**
**DE-A- 3 205 636**

(73) Patentinhaber: **Balcke-Dürr AG, Homberger Strasse 2 Postfach 1240, D-4030 Ratingen 1(DE)**

(72) Erfinder: **Chafik, Efat, Dr., Türmchenswall 81, D-5000 Köln 1(DE)**
Erfinder: **Hinsen, Wilhelm, Am Ostbahnhof 36, D-4030 Ratingen 1(DE)**
Erfinder: **Sporer, Petro, Neustrasse 50, D-4150 Krefeld 1(DE)**

(74) Vertreter: **Patentanwälte Dipl.-Ing. Alex Stenger Dipl.-Ing. Wolfram Watzke Dipl.-Ing. Heinz J. Ring, Kaiser-Friedrich-Ring 70, D-4000 Düsseldorf 11(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 301 452 B1

ACTORUM AG

## Beschreibung

Die Erfindung betrifft ein Verfahren zur Behandlung von Abwasser aus Rauchgasreinigungsanlagen, bei dem durch Zugabe von Fällungs- und Flockungsmitteln Inhaltsstoffe ausgefällt werden und der sedimentierte Schlamm vom Überstandswasser abgetrennt und anschließend in einer getrennten Stufe entwässert wird, wobei im Überstandswasser gelöste Salze, beispielsweise Calciumchlorid oder Natriumsulfat nach der Schlammabtrennung chargenweise durch Zugabe von geeigneten Umsalzstoffen, beispielsweise Natriumcarbonat bzw. Calciumchlorid zu verwertbaren Salzen, beispielsweise Natriumchlorid umgesalzt werden.

Ein Verfahren der voranstehend beschriebenen Art ist in einer älteren nicht vorveröffentlichten Patentanmeldung beschrieben EP-A 263 992. Aufgabe der vorliegenden Erfindung ist eine Verbesserung dieses Verfahrens, insbesondere mit dem Ziel einer Minimierung des Gesamtfehlers beim Umsalzprozeß.

Das erfindungsgemäße Verfahren zur Lösung dieser Aufgabenstellung ist dadurch gekennzeichnet, daß der chargenweise Umsalzprozeß in zwei Schritten durchgeführt wird, indem in einem ersten Schritt 80 bis 90 % der für die Umsalzung notwendigen, in einer ersten Analyse ermittelten Menge über ein volumetrisches Dosiersystem zugegeben wird, nach dieser Zugabe eine erneute Analyse des Abwassers erfolgt und anschließend in einem zweiten Schritt die zur vollständigen Umsalzung erforderliche Restmenge über ein gravimetrisches Dosiersystem zugegeben wird.

Da zwischen dem ersten und zweiten Schritt des Umsalzprozesses eine erneute Analyse des Abwassers erfolgt und die Dosierung der Restmenge zur vollständigen Umsalzung im zweiten Schritt infolge der Verwendung eines gravimetrischen Dosiersystems mit hoher Genauigkeit erfolgt, wird der Gesamtfehler der Umsalzung auf ein Minimum beschränkt. Das erfindungsgemäße Verfahren verbessert demgemäß mit geringem Aufwand die Genauigkeit des Umsalzprozesses ganz entscheidend, wobei eine weitere Erhöhung der Genauigkeit gemäß einer Weiterbildung der Erfindung dadurch erfolgen kann, daß nach dem zweiten Schritt des Umsalzprozesses eine erneute Analyse des Abwassers erfolgt, deren Ergebnis nicht nur zur Kontrolle des vorangegangenen, sondern auch zur Korrektur des nachfolgenden Umsalzprozesses verwendet wird.

Um die Endproduktqualität des auskristallisierten Salzes, beispielsweise NaCl, zu verbessern, wird gemäß einem weiteren Merkmal der Erfindung vorgeschlagen, die Eindampfung des Abwassers in einer mehrstufigen Anlage bis zur Kristallisation des Salzes, beispielsweise NaCl vorzunehmen, wobei die Abtrennung des in den ersten Eindampfstufen ausfallenden Gipses durch Hydrozyklone und nach der, der Kristallisationsstufe vorgeschalteten Eindampfstufe durch einen Abschlämmbehälter erfolgt. Hierdurch wird der in die dritte Stufe gelangende, auskristallisierte Gips minimiert, womit eine Qualitätsverbesserung des Endproduktes verbunden ist.

Die in der Umsalzung auftretenden Meß- und Dosierfehler bedingen einen geringen Schlupf an unerwünschten Salzen, beispielsweise $CaCl_2$, $NaSO_4$ und $Na_2CO_3$, die sich in der Eindampfanlage aufkonzentrieren und auskristallisieren bzw. das Kristallisationsverhalten des gewünschten Salzes, beispielsweise NaCl, negativ beeinflußen. Um diesen negativen Einfluß auszuschalten, wird mit der Erfindung schließlich vorgeschlagen, einen geringen Teilstrom der nach der Gipsabtrennung anfallenden Mutterlauge abzuziehen und zur Rauchgasreinigungsanlage bzw. vor die Schwermetallfällung des Abwassers zurückzuführen. Hierdurch werden die unerwünschten Salze in der Eindampfanlage auf eine die Kristallisation des Salzes, beispielsweise NaCl, nicht beeinflußende Konzentration begrenzt. Außerdem können sich Spuren gelöster Schwermetalle nicht stark anreichern und damit nicht in das Endprodukt gelangen.

In der Zeichnung ist ein vereinfachtes Fließschema einer Anlage zur Durchführung des erfindungsgemäßen Verfahrens dargestellt, das nachfolgend unter Verwendung der Zeichnung erläutert wird.

Das Abwasser, beispielsweise aus einer zweistufigen Rauchgasentschwefelungsanlage mit Kalkstein und Natronlauge als Absorptionsmittel, enthält Natriumchlorid, Calciumsulfat und Calciumcarbonat, Magnesium und Schwermetallverbindungen, Inertstoffe sowie abhängig vom Zugabeverhältnis der beiden Absorptionsmittel entweder Calciumchlorid oder Natriumsulfat. Falls vor der Rauchgaswäsche Stickoxide durch Reduktion mit Ammoniak aus dem Rauchgas entfernt werden, sind zusätzlich Ammoniakionen im Abwasser enthalten, da der $NH_3$-Schlupf der Entstickung mit ausgewaschen wird. Dieses Abwasser wird zuerst einer Schwermetallfällung 1 zugeführt.

Das von der Schwermetallfällung 1 kommende Abwasser wird entsprechend der Taktzeit einer diskontinuierlich, d.h. chargenweise arbeitenden Umsalzung in einem Rührwerksbehälter 2 zwischengespeichert. Dort wird über eine Leitung 8.1 eine Probe entnommen und einem Analysenautomaten 8 zugeführt, in dem mittels Flammphotometer und Chloridmeter das Verhältnis $Na^+/Cl^-$ bestimmt wird.

Ist das $Na^+/Cl^-$-Verhältnis kleiner als 1, wird beispielsweise Natriumcarbonat, ist es größer als 1 beispielsweise Calciumchlorid in entsprechender Menge zudosiert. Es bildet sich Natriumchlorid nach folgenden alternativ ablaufenden Reaktionen:

(1)$CaCl_2 + Na_2CO_3 2\ NaCl + CaCO_3$

(2)$Na_2SO_4 + CaCl_2 2\ NaCl + CaSOJ_4$

Entsprechend dem ermittelten $Na^+/Cl^-$- Verhältnis wird die Dosiermenge an $Na_2CO_3$ bzw. $CaCl_2$ bestimmt. Das im Rührwerksbehälter 2 gespeicherte Abwasser wird nun in einem Reaktionsbehälter 3 entleert.

Aus einer Dosiereinrichtung 7 wird in einem ersten Dosierschritt mittels einer volumetrischen Dosierung über eine Dosierleitung 7.1 80-90 % der errechneten Dosiermenge zugegeben. Nach einer definierten Reaktionszeit wird aus dem Reaktionsbehälter 3 eine Probe über eine Leitung

8.2 entnommen und ebenfalls im Analyseautomaten 8 untersucht. Die hier errechnete Dosiermenge wird nun mittels einer gravimetrischen Dosiereinrichtung über eine Dosierleitung 7.1 zugegeben. Nach einer weiteren definierten Reaktionszeit wird das Abwasser in einem Abpumpbehälter 4 entleert, von wo es mittels Pumpen kontinuierlich einem nachfolgenden Eindicker 5 zugeführt wird.

Der aus dem Eindicker abfließenden Lösund wird über eine Leitung 8.3 eine Probe entnommen, die im Analysenautomaten 8 untersucht wird. Das hier erzielte Ergebnis dient zur Kontrolle des vorangegangenen bzw. zur Korrektur des nachfolgenden Umsalzprozeß.

Das ausfallende Calciumsulfat oder Calciumcarbonat setzt sich im Eindicker 5 ab. Es wird, nachdem ein Teil des Kristallisationskeime in den Rührwerksbehälter 2 zurückgeführt wurde, in einem Sammelbehälter 6 gesammelt und in den Wäscher der Rauchgasentschwefelungsanlage zurückgeführt. Der zurückgeführte Gips wird so dem Gips aus der Entschwefelung zugegeben und mit diesem ausgetragen. Das Calciumcarbonat wird so vorteilhaft als Absorptionsmittel beim Entschwefeln verwendet. Die Eindampfung des umgesalzten Abwassers erfolgt hier beispielsweise in einer dreistufigen Anlage.

Die Klarphase aus dem Eindicker 5 - im wesentlichen eine mit Gips gasättigte Natriumchloridlösung - wird über einen Zwischenbehälter 9 einem ersten, indirekt über einen Wärmetauscher 10 beheizten Verdampfer 11 zugeführt. Im Verdampfer 11 wird die Lösung eingedampft; dabei kristallisiert der Gips aufgrund seiner wesentlich geringeren Löslichkeit aus. Es wird in einem nachgeschalteten Hydrozyklon 20 aus der eingedampften Flüssigkeit abgetrennt und in den Wäscher der Rauchgasentschwefelungsanlage zurückgeführt. Der Überlauf des Hydrozyklons 20 wird in einem zweiten Verdampfer 13, der indirekt mit den Brüden aus dem ersten Verdampfer 11 beheizt wird, weiter aufkonzentriert. Der hierbei ausfallende Gips wird über einen Abschlämmbehälter 23 aus der Salzsole abgeschieden und ebenfalls in die Rauchgasentschwefelungsanlage zurückgeführt. Der Klarlauf des Abschlämmbehälters 23 wird in einem dritten Verdampfer 15, der indirekt mit den Brüden des zweiten Verdampfers 13 beheizt wird, bis zur Kristallisation des Natriumchlorids aufkonzentriert.

Mit der dreistufigen Verdampfung wird eine NaCl-Reinheit von mehr als 95 Gewichtsprozent erreicht. Das auskristallisierte Natriumchlorid wird anschließend auf einem Bandfilter 16 entwässert und in einem nachfolgenden Trockner 17 auf die gewünschte Restfeuchte getrocknet.

Die Brüden aus den drei Verdampfern 11, 13, 15 werden, nachdem sie in Wärmetauschern 12,14 bzw. einem Kühler 17 kondensiert wurden, in einem Behälter 24 gesammelt und als Prozeßwasser bei der Entschwefelung eingesetzt. Falls sich Ammoniak im Abwasser befindet, wird dieses vorher aus dem Brüdenkondensat in einer Strippkolonne 25 mit Wasserdampf oder Heißluft ausgetrieben.

Im Zulauf in den ersten Verdampfer 11 wird durch Rückführung von Natriumchlorid über eine Leitung 28 mit Hilfe einer Regel einrichtung 26 ein konstantes $Na^+/Ca^{++}$-Verhältnis eingestellt. Damit wird sowohl eine exakte Auslegung der Verdampfer 11,13, 15 auf dieses Verhältnis ermöglicht, als auch ein gleichbleibender Reinheitsgrad des gewonnenen Natriumschlorids erreicht. Gleichzeitig wird in den Kreislauf des ersten und zweiten Verdampfers 11,13 über Leitungen 18,21 mit Regeleinrichtungen 19,22 eine bestimmte Menge Gips als Kristallisationskeime zurückgeführt.

Ein Teilstrom der hinter dem Bandfilter 16 anfallenden Mutterlauge wird dem Zulauf der Schwermetallfällung 1 bzw. der Rauchgasentschwefelungsanlage über eine Leitung 29 mit Regeleinrichtung 30 zurückgeführt, um die Konzentration der Salze auf einen die Kristallisation des NaCl nicht beeinflussenden Wert zu begrenzen und eine zu starke Anreicherung der Spuren gelöster Schwermetalle zu vermeiden.

**Bezugsziffernliste**

1 Schwermetallfällung
2 Rührwerksbehälter
3 Reaktionsbehälter
4 Abpumpbehälter
5 Eindicker
6 Sammelbehälter
7 Dosiereinrichtung
7.1 Dosierleitung
7.2 Dosierleitung
8 Analyseautomaten
8.1 Leitung
8.2 Leitung
8.3 Leitung
9 Zwischenbehälter
10 Wärmetauscher
11 1. Verdampfer
12 Wärmetauscher
13 2. Verdampfer
14 Wärmetauscher
15 3. Verdampfer
16 Bandfilter
17 Trockner
18 Leitung
19 Regeleinrichtung
20 Hydrozyklon
21 Leitung
22 Regeleinrichtung
23 Abschlämmbehälter
24 Behälter
25 Strippkolonne
26 Regeleinrichtung
27 Kühler
28 Leitung
29 Leitung
30 Regeleinrichtung

**Patentansprüche**

Verfahren zur Behandlung von Abwasser aus Rauchgasreinigungsanlagen, bei dem durch Zugabe von Fällungs- und Flockungsmitteln Inhaltsstoffe

ausgefällt werden und der sedimentierte Schlamm vom Überstandswasser abgetrennt und anschließend in einer getrennten Stufe entwässert wird, wobei im Überstandswasser gelöste Salze, beispielsweise Calciumchlorid oder Natriumsulfat nach der Schlammabtrennung chargenweise durch Zugabe von geeigneten Umsalzstoffen, beispielsweise Natriumcarbonat bzw. Calciumchlorid zu verwertbaren Salzen, beispielsweise Natriumchlorid umgesalzt werden,**dadurch gekennzeichnet,**
daß der chargenweise Umsalzprozeß in zwei Schritten durchgeführt wird, indem in einem ersten Schritt 80 bis 90 % der für die Umsalzung notwendigen, in einer ersten Analyse ermittelten Menge über ein volumetrisches Dosiersystem zugegeben wird, nach dieser Zugabe eine erneute Analyse des Abwassers erfolgt und anschließend in einem zweiten Schritt die zur vollständigen Umsalzung erforderliche Restmenge über ein gravimetrisches Dosiersystem zugegeben wird.

2. Verfahren nach Anspruch 1, dadurch gekennzeichnet, daß nach dem zweiten Schritt des Umsalzprozesses eine erneute Analyse des Abwassers erfolgt, deren Ergebnis zur Kontrolle des vorangegangenen bzw. zur Korrektur des nachfolgenden Umsalzprozesses verwendet wird.

3. Verfahren nach Anspruch 1 oder 2, dadurch gekennzeichnet, daß die Eindampfung des Abwassers in einer mehrstufigen Anlage bis zur Kristallisation des Salzes (beispielsweise NaCl) erfolgt, wobei die Abtrennung des in den ersten Eindampfstufen ausfallenden Gipses durch Hydrozyklone und nach der, der Kristallisationsstufe vorgeschalteten Eindampfstufe durch einen Abschlämmbehälter erfolgt.

4. Verfahren nach mindestens einem der Ansprüche 1 bis 3, dadurch gekennzeichnet, daß ein geringer Teilstrom der nach der Salzabtrennung anfallenden Mutterlauge abgezogen und zur Rauchgasreinigungsanlage bzw. vor die Schwermetallfällung des Abwassers zurückgeführt wird.

5. Verfahren nach mindestens einem der Ansprüche 1 bis 4, dadurch gekennzeichnet, daß die Genauigkeit der Umsalzung durch Verwendung von Flammenphotometer und Chloridmeter als Meßgeräte erhöht wird.

## Claims

1. A method of treating waste water from flue–gas purification plants,constituents being precipitated by adding precipitation and floculating agents and the sedimented sludge being separated from the supernatant water and subsequently dewatered in a separate stage and salts such as calcium chloride or sodium sulphate dissolved in the supernatant water are converted to usefull salts, e.g. sodium chloride, in batches by adding suitable double decomposition substances, e.g. sodium carbonate or calcium chloride after the sludge separation,characterised in that the batchwise double decomposition process is carried out in two steps, i.e. a first step in which 80 to 90% of the amount necessary for double decomposition and calculated by a first analysis is added through a volumetric metering system, after which a second analysis of the waste water is made and subsequently, in a second step, the remaining amount necessary for complete double decomposition is added through a gravimetric metering system.

2. A method according to claim 1, characterised in that after the second step of the double decomposition process the waste water is again analysed and the result is used to check the preceding double decomposition process or correct the subsequent double decomposition process.

3. A method according to claim 1 or 2, characterised in that the waste water is concentrated in a multi–stage plant until the salt (e.g. NaCl) crystallises,and the gypsum precipitating in the first concentration stages is separated by hydrocyclones and by an elutriating tank after the concentration stage which precedes the chrystallisation stage.

4. A method according to at least one of claims 1 to 3, characterised in that a small part of the stream of mother liquor after the salt separation is drawn off and returned to the flue–gas purification plant or to a place upstream of where the heavy metals are precipitated from the waste water.

5. A method according to at least one of claims 1 to 4, characterised in that the accuracy of double decomposition is increased by using flame photometers and chloride–meters as measuring instruments.

## Revendications

1. Procédé de traitement des eaux résiduaires provenant d'installations d'épuration de gaz de fumées, selon lequel des substances contenues sont précipitées par addition d'agents de précipitation et de floculation, les boues sédimentaires étant séparées des eaux surnageantes et ensuite asséchées au cours d'une étape séparée, puis après la séparation des boues, des sels dissous dans les eaux surnageantes, par exemple du chlorure de calcium ou du sulfate de sodium, étant transformés de manière discontinue et par double décomposition, en sels utilisables comme par exemple du chlorure de sodium, par addition de substances de double décomposition, telles que par exemple du carbonate de sodium ou du chlorure de calcium, caractérisé en ce que le processus discontinu de double décomposition par charges, est effectué en deux étapes, à savoir que dans une première étape, on procède à l'addition, à l'aide d'un système de dosage volumétrique, de 80 à 90% de la quantité nécessaire à la double décomposition et déterminée par une première analyse, et en ce que l'on effectue, après cette addition, une nouvelle analyse des eaux résiduaires, pour procéder ensuite, au cours d'une deuxième étape, à l'addition, à l'aide d'un système de dosage gravimétrique, de la quantité restante nécessaire à l'achèvement de la double décomposition.

2. Procédé selon la revendication 1, caractérisé en ce que l'on effectue, après la deuxième étape du processus de double décomposition, une nouvelle analyse des eaux résiduaires, dont le résultat va servir non seulement au contrôle du processus de double décomposition précédent, mais également a la correction du processus suivant.

3. Procédé selon la revendication 1 ou 2, caractérisé en ce que l'évaporation des eaux résiduaires est effectuée dans une installation à étages multiples, jusqu'à cristallisation du sel (par exemple NaCl), la séparation du gypse apparaissant dans les premiers étages d'évaporation se faisant par des hydrocyclones, et par un réservoir de purge des boues dans l'étage d'évaporation qui précède l'étage de cristallisation.

4. Procédé selon au moins l'une des revendications 1 à 3, caractérisé en ce que l'on soutire une faible partie du flux d'eau-mère formée après la séparation du sel et de la recycler vers l'installation d'épuration des gaz de fumées ou en amont du dispositif de précipitation des métaux lourds des eaux résiduaires.

5. Procédé selon au moins l'une des revendications 1 à 4, caractérisé en ce que la précision de la double décomposition est améliorée par l'utilisation de photomètres de flamme et d'analyseurs de chlorure en guise d'appareils de mesure.

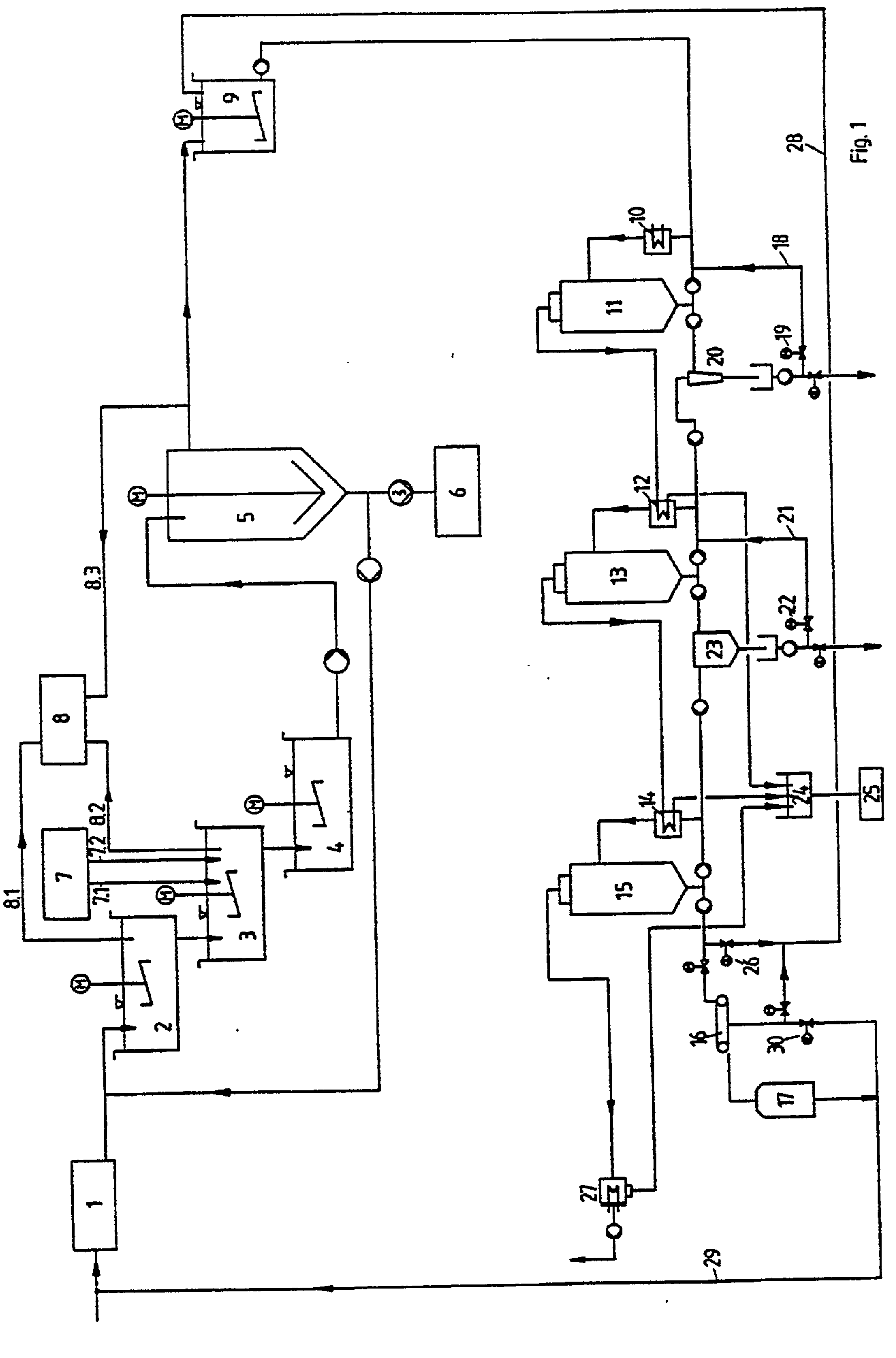

Fig. 1